(19) **Europäisches Patentamt**

**European Patent Office**

**Office européen des brevets**

(11) **EP 1 029 225 B1**

(12) **EUROPEAN PATENT SPECIFICATION**

(45) Date of publication and mention
of the grant of the patent:
**22.10.2003 Bulletin 2003/43**

(51) Int Cl.⁷: $G01L\ 1/22$, $G01L\ 25/00$, $G01L\ 27/00$

(21) Application number: **98905629.6**

(22) Date of filing: **27.02.1998**

(86) International application number:
**PCT/IT98/00043**

(87) International publication number:
**WO 99/024804 (20.05.1999 Gazette 1999/20)**

(54) **A STRAIN GAUGE STRIP AND APPLICATIONS THEREOF**

DEHNUNGSMESSSTREIFEN UND DESSEN ANWENDUNGEN

JAUGE DE CONTRAINTE ET APPLICATIONS

(84) Designated Contracting States:
**DE ES FI FR GB IE SE**

(30) Priority: **06.11.1997 IT RM970679**

(43) Date of publication of application:
**23.08.2000 Bulletin 2000/34**

(73) Proprietor: **Powerco S.P.A.**
**72100 Brindisi (IT)**

(72) Inventors:
• **VOLODIN, Nicolay M.**
**Chimki Moscow Region (RU)**
• **MIODUSHEVSKY, Pavel**
**Moscow (RU)**
• **KAMINSKY, Vladimir V.**
**St.Petersburg (RU)**

(74) Representative: **Leone, Mario et al**
**Società Italiana Brevetti S.p.A.**
**Piazza di Pietra 39**
**00186 Roma (IT)**

(56) References cited:
**EP-A- 0 602 606          US-A- 5 297 438**

• **"DIRECT METALLIZATION PROCESSES" IBM
TECHNICAL DISCLOSURE BULLETIN, vol. 30,
no. 11, 1 April 1988, page 324/325 XP000096806**

## Description

The present invention relates to a strain gauge strip, of the type made of semiconductor material, that can be mechanically applied to a sensitive element subject to deformation.

The present invention further relates to applications of said strain gauge strip, in particular to electric strain gauge sensitive elements, measuring instruments and related calibration procedures, pressure scales and transducers.

It is a known fact that strain gauge strips (such as known from EP-A-0 602 606) are widely used to measure dynamic deformations and, indirectly, to measure forces such as weights, pressures and other forces causing said deformations in a special support.

For this purpose they are electrically assembled as a Wheatstone bridge to limit the influence of variations in temperature in the strain gauge strips.

The Wheatstone bridge is excited, at two opposite ends, by a reference voltage; the deformation causes a variation in the length of strain gauge strips, with a corresponding variation in the associated electrical resistance value. On the other opposite ends of the bridge a signal is detected, consisting in an electrical voltage substantially corresponding to the deformation that has occurred.

This signal represents the force that has caused deformation of the sensitive element.

However, known strips are subject to certain problems, which considerably limit the extent to which they are used.

In particular, they generate a signal that does not exceed 2-3 mV/V with respect to the excitation voltage. Furthermore, the electrical resistance they provide is too low, resulting in a considerable dissipation of energy, and they have to be assembled in complex layouts that foresee a number of resistors for calibration and control of the influence of temperature.

In order to avoid the above problems at least partially, strain gauge strips based on semiconductor materials, e.g. silicon, have been provided, which generally make it possible to obtain a greater output signal.

This type of strip, although it is more sensitive, is considerably subject to influences in temperature, so that strips of this kind can be used in extremely controlled conditions, for example in physics laboratories and the like.

Furthermore, a strain gauge strip based on known semiconductor material can be used to measure deformations that fall within very restricted ranges.

The most important types of commercial use, for example those connected with determination of weight in the retail sale of goods and products, are therefore precluded for this type of strain gauge strip, as in any other form of use out of doors or in environments that are not thermally conditioned.

The technical problem at the base of the present invention is that of providing a strain gauge strip that is capable of overcoming the drawbacks mentioned with reference to the prior art.

This problem is overcome by a strain gauge strip as specified above, characterised in that said semiconductor material is Samarium monosulphide.

The main advantage of the strain gauge strip according to the present invention lies in the fact that it gives excellent performance in terms of precision and sensitivity, without suffering the influence of temperature and for a wide range of deformations, well suited to commercial use.

The present invention will be described in the following with reference to a number of preferred embodiments thereof, given merely as a non-limiting example. Reference will be made to the figures in the enclosed drawings, in which:

**figure 1** shows an isometric plan view of a sensitive element incorporating strain gauge strips according to the invention;

**figure 2** shows, in co-operation with figure 1, the rear side of the sensitive element;

**figure 3** shows the electrical wiring diagram for the strain gauge strips of figure 1;

**figure 4** shows a detail, in a cross-section view, of the sensitive element of figure 1, taken along line X-X;

**figure 5** shows a plan elevation view of a balance incorporating the support of figure 1;

**figure 6** shows a plan elevation view of a pressure transducer incorporating strain gauge strips according to the present invention; and

**figure 7** shows a schematic view of an arrangement of the sensitive element. With particular reference to figure 1, a sensitive electric strain gauge element is indicated as a whole with E. It is of the type normally incorporated in measurement instruments, such as scales and the like.

It comprises an elastically deformable support 1 substantially in the shape of a bending bar, with a rectangular section, which has a free end 2 capable of being placed under stress by a force to be measured, for example a weight, and a fixed end 3.

In this regard, and as will described in greater detail in the following, the support 1 is such that it can be associated with extension sensors of the strain gauge strip type.

The support 1 has a pair of first and second through holes, the one nearest to the free end 2 being indicated with 4 and the one nearest to the fixed end 3 being indicated with 5, respectively, which have a circular section.

The holes 4, 5 have a parallel axis of symmetry, both perpendicular to the support 1, and are substantially aligned along the support 1 at prescribed distances from the respective ends 2, 3.

The diameter of the holes is comparable to the thickness of the support 1 which, in correspondence with each of the holes 4, 5, has a narrow top portion 6 and a narrow bottom portion 7. The four narrow portions all have the same minimum thickness.

The support 1 also has a through slot 8 connecting the holes 4, 5. The slot has a parallel development with respect to the support 1, along its longitudinal axis of symmetry.

The support 1 described above can be obtained in one piece from a bar of elastic material, for example steel.

As an effect of the geometry of the sensitive element (E), as the support 1 is suitable to be shelf-locked at the fixed end 3, if a force is applied perpendicular to the element E, in correspondence with the free end 2 of the support 1, the latter will bend substantially into the form of an s. The narrow top portion 6 of the first hole 4 and the narrow bottom portion 7 of the second hole 5 undergo the same tension, whereas the narrow bottom portion 7 of the first hole 4 and the narrow top portion 6 of the second hole 5 are subjected to an equivalent compression.

The support 1, which is usually made of metal, is covered with an insulating layer 9 which, in the present embodiment, is of SiO.

Said layer 9 can be deposited in situ, for example by means of a known chemical vapour deposition process. Using this process it is possible to obtain an optimum thickness of the insulating layer 9, which must also remain mechanically anchored to the support 1, at least within the range of possible deformation, compression or tension of the latter, and must consequently deform with it.

Said thickness is comprised between 0.5 μm and 10.0 μm, and is preferably equal to approximately 5.0 μm.

In correspondence with the narrow portions 6, 7 and in symmetry with the points of maximum deformation, the support 1 has respective strain gauge strips, the one on the top narrow portion 6 of the first hole 4 being indicated with 10a, the one on the top narrow portion 6 of the second hole 5 being indicated with 10b, the one on the bottom narrow portion of the second hole 5 being indicated with 10c, and the one on the bottom narrow portion of the first hole 4 being indicated with 10d, respectively.

The strain gauge strips 10a-10d are made of a semiconductor material. They are of a kind that will remain anchored to the insulating layer 9 during deformation of the latter. This anchoring causes a corresponding longitudinal deformation of the strip 10a-10d, either stretching or contracting it, which in turn causes a variation in the value of the electrical resistance of the strips 10a-10d.

In the strips 10a-10d according to the present invention said semiconductor material comprises Samarium monosulphide, hereinafter indicated in brief as SmS.

Each of the strips 10a-10d has a substantially rectangular shape extending in the direction of the support 1. They are arranged symmetrically at the point of maximum thinness, where the greatest deformation occurs.

In other words, the electrical axis of each strip 10a-10d, that is to say the mid point at which the resistance measured from there to one of the ends is the same as the resistance measured from there to the other end, coincides with the mechanical axis of deformation, that is to say the axis along which deformation of each narrow section 6, 7 is symmetrical.

The thickness of each strip is micrometric, in particular it can be between 0.5 μm and 1.0 μm and for preference approximately 0.7 μm.

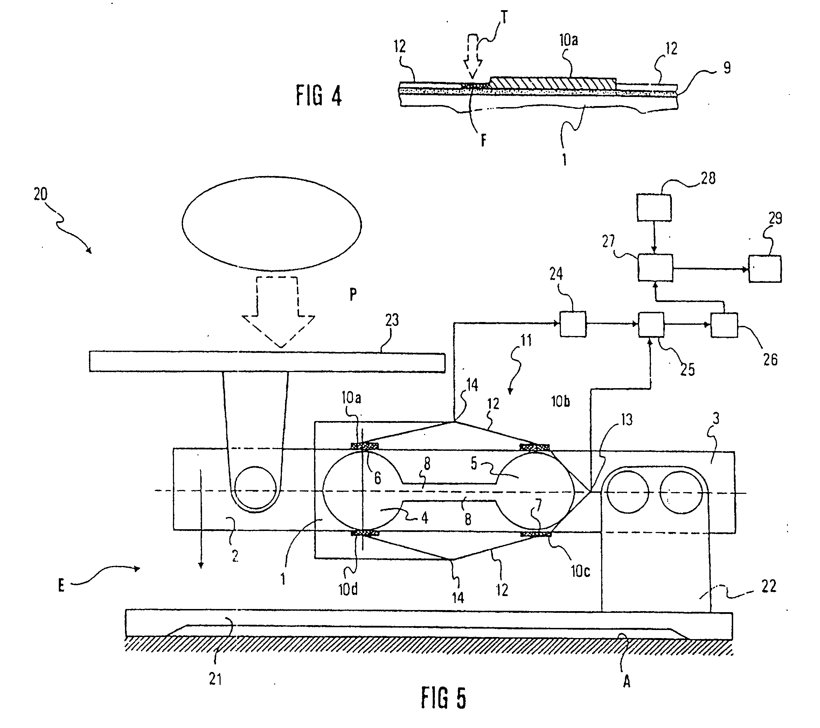

The SmS can be deposited as a polycrystalline structure or as a substantially monocrystalline structure, directly onto the insulating layer 9 (figure 4).

The strips with an SmS base are capable of length-wise deformation, which varies their resistance and provides the output signal that is proportional to a so-called gauge factor K, described by:

$$K = \delta R / \varepsilon * R$$

wherein:

$\delta R$ = variation of the gauge resistance
$\varepsilon$ = gauge resistance
$R$ = strain

In the polycrystalline SmS strips K can have a value exceeding 50. This value can even reach 100.

In the substantially monocrystalline SmS, strips K has a value of approximately 250, much higher than similar strain gauge strips based on a different semiconductor material; this makes it possible to obtain a measuring precision of 0.005%.

In the case of SmS this value of K remains substantially unchanged for an extremely wide interval of $\varepsilon$, up to $3.10^{-3}$, so that the response of each of the strain gauge strips 10a-10d is substantially linear.

Furthermore, K does not vary appreciably over an extremely wide range of temperatures, for example between -50°C and +50°C, so that the strips can be used in unconditioned environments.

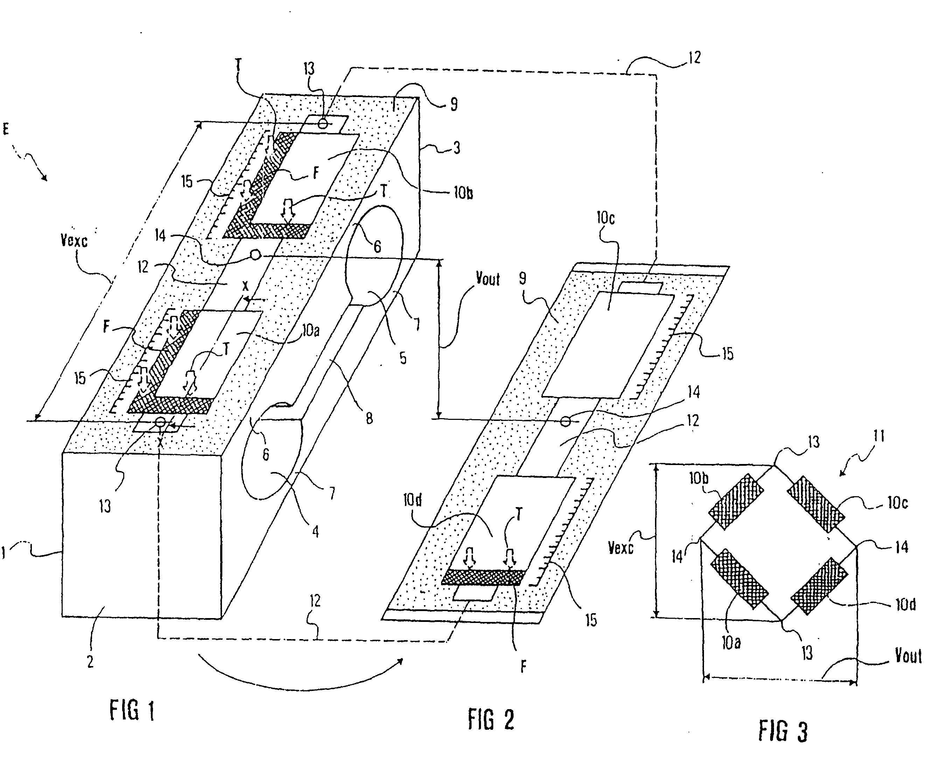

With reference to figure 3, the four strips 10a, 10b, 10c and 10d are electrically connected to one another according to a first Wheatstone bridge arrangement, indicated as a whole with 11.

For this purpose each of the strain gauge strips 10a-10d is connected to the adjacent one by means of a conductor strip 12.

The conductor stripe 12 is formed by chemical vapour deposition of a layer of conductor material, preferably nickel or cobalt based, that provides a substantially zero contact resistance and can easily be connected to a conductor wire, for example made of copper.

It is understood that the connection between the conductor strip 12 and the insulating layer 9 has a considerable mechanical reliability, such as to follow the deformation of the support 1 (figure 4).

The first bridge 11, as shown in figures 1 to 3, is subjected to an excitation voltage $V_{exc}$ at two opposite ends, known as excitation ends and indicated with 13, in particular the ones between 10b and 10c and between 10a and 10d. When the element E is subjected to stress that causes it to bend into the shape of an S, as described above, the strips 10a and 10c are elongated, whereas the strips 10b and 10d are compressed.

In static conditions, with zero deformation, the bridge 11 is perfectly balanced, and between the other opposite ends, known as the detection ends and indicated with 14, in particular the ends between 10a and 10b and between 10c and 10d, there is no voltage.

When deformation takes place, the bridge is electrically unbalanced. At the detection ends 14 an electric signal is generated, consisting in a voltage $V_{out}$, corresponding to the deformation and to the force to which the support 1 has been subjected and which has caused the deformation.

The output signal $V_{out}$ is significantly high, in the order of approximately 50 mV/V with respect to the excitation voltage $V_{exc}$.

The overall resistance of the strain gauge strips 10a-10d can be effectively varied within a range comprised between 200 Ω and 500000 Q, which makes it possible to decrease the dissipated energy and to receive a very high output signal even without amplification. The decreased energy consumption makes it possible to use normal disposable and/or rechargeable batteries to excite the Wheatstone bridge.

Furthermore, the sensitive element E continues to give a constant operating quality even when subjected to intense nuclear type radiation, for example γ rays of an intensity equivalent to $10^{10}$ Roentgen.

As well as the above mentioned physical characteristics, the sensitive element E described above can be advantageously subjected to a calibration procedure, as will be described in greater detail in the following.

A thin layer of SmS-based semiconductor material, either polycrystalline or monocrystalline, can be subjected to a conversion that generates a phase acting substantially like a metal, that is to say in which the electrical resistance of the converted material is typical of a metal (very low) rather than typical of a semiconductor.

It has been observed that SmS is subject to effective conversion if locally subjected to a pressure even lower than 30 kbar, that is to say approximately 20 kbar, the pressure obtained by manual rubbing. This effect can be obtained advantageously using pressures of less than 10 kbar.

The reason for this physical characteristic lies in the fact that for said local pressure values there is an increase in the density of electrons, which are responsible for the phenomenon of electrical conduction up to $1.8 \cdot 10^{22}$ cm$^{-3}$, the typical value for metals.

For these reasons, the following procedure is used.

After positioning the fixed end 3 of the sensitive element E on a special spindle, a known calibration force is applied, for example a weight or a known flexural force, at the free end 2.

Due to this force the support 1 is deformed. A given electrical signal is generated, which can be conveniently measured and compared with an electrical reference signal.

After considering the difference between the two signals, a change in phase is created, in one of the strips 10a-10d or on more than one of said strips, as described above, that is to say from a substantially polycrystalline or monocrystalline phase to a phase acting like a metal.

This change is carried out by exerting a predetermined pressure T on a localised area F.

The pre-determined pressure T is exerted by rubbing, and has a value of less than 30 kbar, preferably of approximately 20 kbar.

The chosen localised area, due to compression, takes on a thickness equivalent to approximately 10% of the original thickness.

The position and dimensions of the localised section F can be carefully chosen with reference to graduated lines 15 at the edges of the strips 10a-10d.

As well as collimating the calibration signal and the reference signal, the change can be performed advantageously in such a way that the electrical axis of the single strips 10a-10d always coincides with the respective mechanical axes of deformation.

This change, in the case of SmS, is particularly simple. In fact the crystalline phase and the metal phase have a totally different colour, golden for the former and dark, brownish for the latter.

When operating on more than one strip it is also possible to balance any unbalance caused by corrections to a single strip.

Further, the change of phase is such that a virtually zero resistance is maintained at the points of connection between strain gauge strips 10a-10d and conductor strips 12.

Advantageously the calibration is carried out in relation to a specific temperature. For this purpose the operations described above can be carried out in controlled temperature conditions in a suitably conditioned environment.

With reference to figure 5, a scale 20 will now be described, incorporating the sensitive element 1 described above. Parts that are the same or have the same function as those illustrated in precedence are given the same reference number.

The scale 20 comprise a fixed frame 21, capable of being arranged on a support surface A, having shelf-type engagement means 22 connected to the fixed end 3 of the sensitive element E.

On the opposite free end 2 a load platform 23 is rigidly fixed, said platform being of the type suitable to hold a weight P to be measured.

In the present embodiment, determination of the exact weight is accompanied by determination of the price of sale for the product of weight P.

The scale 20 have, on the element E, strain gauge strips 10a-10d as described above. These have already been calibrated according to the process of the invention.

The strips 10a-10d are electrically connected by means of a Wheatstone bridge 11. At the excitation ends 13 an excitation voltage $V_{exc}$ is applied.

Once the weight P has been positioned on the plate 23, the element E undergoes an elastic type deformation. The strips 10a and 10c are subjected to elongation, whereas the strips 10b and 10d are subjected to compression.

The first bridge 11 is thus unbalanced, and an electrical signal Vout is generated, substantially corresponding to the weight P.

The signal Vout is received by an amplifier 24, which transmits it to a comparator 25, which also receives the excitation voltage Vexc. The resulting signal is passed to an analog-to-digital converter 26, which is in turn connected to a microprocessor 27.

The microprocessor 27 receives data, for example the price per kilo or type of goods, from a keyboard 28 and generates output values, such as the price of sale, weight detected and the like, which can be read from a display 29 or printed on a receipt.

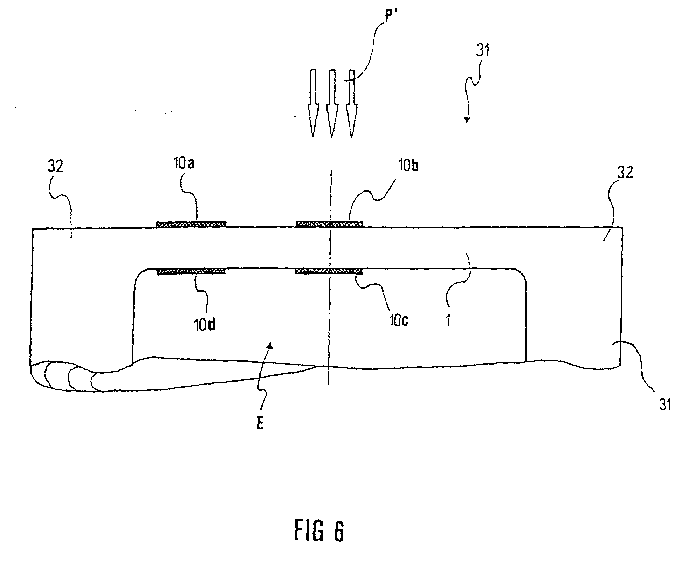

The same inventive concept can also be applied on a different type of measurement instrument, for example a pressure transducer, indicated with 30 in figure 6, capable of measuring a static pressure P' in a fluid such as water or air.

In said transducer 30 the sensitive element E foresees an elastically deformable membrane-type support 1, in the shape of the end surface of a stainless steel cylinder 31. Inside the cylinder 31, which is partially shown in the figure, there is a known pressure; in effect the pressure measured is a differential or relative pressure.

An insulating layer of glass or mica, not shown in figure 6, is provided on both surfaces of the membrane 1, to which the strain gauge strips 10a-10d can be anchored.

The thickness of the insulating layer is advantageously between approximately 10 µm and 30 µm.

The SmS strain gauge strips 10a-10d are anchored to said layer of mica or glass by a chemical vapour deposition process. The glass or mica layer, together with the strips 10a-10d, is bonded to the metal membrane 1. The SmS strain gauge strips 10a-10d can be also deposited on the insulation layer of SiO that can be deposited on the metal membrane 1 in a similar manner that was already described above for the sensitive element E of the scale 20.

The strain gauge strips 10a and 10d are applied to the insulating layer and, following application of the latter to the membrane 1, they are arranged close to the edge 32 of the cylinder 21, that is to say in the point of maximum deformation; the strip 10a is subjected to elongation as a result of the pressure P', whereas the strip 10d is subjected to compression.

The strain gauge strips 10b and 10c, on the other hand, are positioned in correspondence with the axis C of the cylinder, at the point of maximum curvature of the membrane 1.

The strips 10a-10d are connected by means of a Wheatstone bridge as described above; the electrical signal corresponding to the pressure P' is generated and treated in the same way used for the scale 20.

The calibration procedure described above can also be advantageously used for the transducer 30.

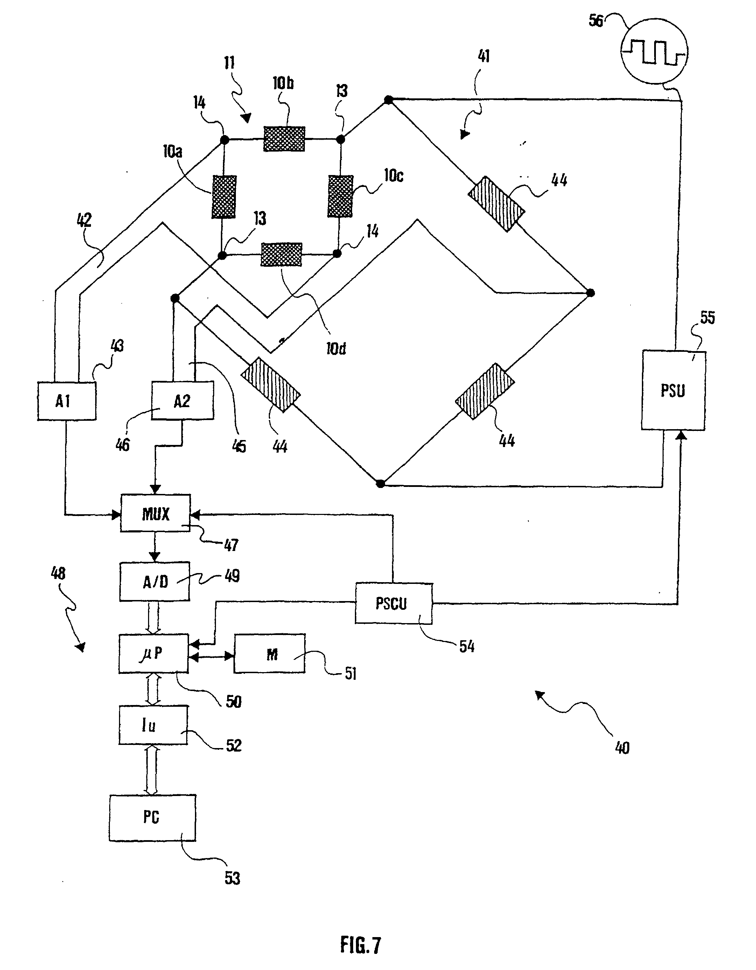

In scales or pressure transducers as described above, in order to provide the resistance thermal variation of the first bridge 11 with a complete compensation, the bridge 11 itself is connected to an accentuation and measurement unit 40 which is shown in figure 7.

Such unit 40 comprises a second Wheatstone bridge arrangement 41 wherein said first bridge 11 is one of its four shoulders.

A first channel 42 of the measurement unit 40, which is sensitive to load or pressure, is connected to the free diagonal of the first bridge 11. Said channel 42 comprises a first measuring amplifier 43.

The other shoulders of the second and external bridge 41 are resistors 44, which are precise having a high stability to temperature variation. The resistors 44 have the same value of resistance that the first bridge 11.

A temperature sensitive channel 45 of the measurement unit 40 is connected to the free ends of a diagonal of the external bridge 41. Said channel 45 comprises a second measuring amplifier 46.

Both amplifiers 43, 46 are connected to a multiplexer 47 which is linked to a line 48 comprising an A/D converter 49, a microprocessor 50 which is connected to a memory 51, an interface 52 and a computer unit 53.

The multiplexer 47 and the microprocessor 50 are connected to a power supply control unit 54.

An excitation unit 55, i.e. a power supply unit, is connected to the free ends of the other diagonal of the external bridge 41, whereby an excitation signal 56 is provided. The excitation unit is connected to the power supply control unit 54.

During the calibration procedure, the sensitive element E is heated up to a prescribed value of temperature in an unloaded condition.

The thermal variation of the first bridge is thereby recorded. During the successive measurements such characteristic can be used for corrections.

As well as the advantages mentioned above, the strain gauge strip described makes it possible to construct sensitive elements which, in relation to the working temperature, geometry of the elastic support and flexural parameters, is particularly easy to calibrate and in which the coincidence between the electrical axis of each strip and the corresponding mechanical axis of deformation associated therewith can be maintained.

Obviously, calibration is also made easy by the fact that it is associated with rapid detection of the change in characteristics of each single strip, indicated by the change in colour thereof.

The strain gauge strip and applications thereof described above can be subjected to further modifications and adjustments by a person skilled in the art, in order to satisfy additional needs and requirements, without departing from the scope of protection of the present invention, as defined in the attached claims.

**Claims**

1. A strain gauge strip (10a), made using a semiconductor material, of the type that can be mechanically applied to a support (1) subject to deformation, **characterised in that** said semiconductor material is Samarium monosulphide.

2. A strain gauge strip (10a) according to claim 1, having a thickness of between 0.5 µm and 1.0 µm.

3. A strain gauge strip (10a) according to claim 2, wherein said thickness is approximately 0.7 µm.

4. A strain gauge strip (10a) according to any one of the preceding claims, wherein the Samarium monosulphide is monocrystalline.

5. A sensitive electric strain gauge element (E), in particular for measuring instruments (20, 30), of the type comprising one or more strain gauge strips (10a, 10b, 10c, 10d), made of semiconductor material, connected to an elastically deformable support (1) capable of being subjected to a force (P, P') to be measured, and electrically connected to one another to generate an electrical signal corresponding to said force, **characterised in that** said semiconductor material is Samarium monosulphide.

6. A sensitive element (E) according to claim 5, wherein said one or more strain gauge strips (10a, 10b, 10c, 10d) have a thickness of between 0.5 µm and 1.0 µm.

7. A sensitive element (E) according to claim 6, wherein said thickness is approximately 0.7 µm.

8. A sensitive element (E) according to any one of claims 5 to 7, wherein the Samarium monosulphide is monocrystalline.

9. A sensitive element (E) according to any one of claims 5 to 8, which has an insulating layer (9) between the support (1) and said strain gauge strips (10a, 10b, 10c, 10d).

10. A sensitive element (E) according to any one of claims 5 to 8, which has four strain gauge strips (10a, 10b, 10c, 10d) electrically assembled to form a Wheatstone bridge arrangement (11).

11. A sensitive element (E) according to any one of claims 5 to 8, wherein said one or more strain gauge strips (10a, 10b, 10c, 10d) are arranged in correspondence with the points of maximum deformation and/or curve (6, 7, 32, A) of the support (1).

12. A sensitive element (E) according to claim 9, wherein said insulating layer is made of SiO.

13. A sensitive element (E) according to claim 12, wherein the SiO is deposited by means of a chemical vapour deposition process.

14. A sensitive element (E) according to claim 10, wherein the strain gauge strips (10a, 10b, 10c, 10d) are electrically assembled by means of conductor strips (12) formed by means of Nickel and/or Cobalt deposition.

15. A sensitive element (E) according to claim 11, wherein said strain gauge strips (10a, 10b, 10c, 10d) are arranged in such a way that their electrical axis coincides with the mechanical axis of deformation of the support (1).

16. A sensitive element (E) according to claim 15, wherein said support (1) has the form of an elongated bar with a rectangular cross-section, having a pair of through holes (4, 5), of circular section, the same diameter and axes parallel to each other, positioned in such a way as to define top (6) and bottom (7) thin sections of the same thickness, said support (1) further comprising a through slot (8), running parallel to the support (1) along its longitudinal axis, which places the two through holes (4, 5) in communication with each other, said thin portions (6, 7) determining said mechanical axes of deformation.

17. A sensitive element (E) according to any one of claims 5 to 8, wherein the elastically deformable support is a membrane (1) forming the closure of a cylinder (31).

18. A sensitive element (E) according to claim 17, wherein the membrane (1) is coated with an insulating layer made of glass or mica.

19. A sensitive element (E) according to claim 18, wherein the insulating layer has a thickness of between 10 μm and 30 μm.

20. A sensitive element (E) according to claim 10, wherein said first Wheatstone bridge arrangement (11) is one of the shoulders of a second Wheatstone bridge arrangement (41) where the other shoulders are resistors (44) having the same value of resistance that the first Wheatstone bridge arrangement (11), providing that an excitation unit (55) is connected to the free ends of one diagonal of the second Wheatstone bridge arrangement (41), a load or pressure sensitive channel (42) is connected to the free diagonal of the first Wheatstone bridge arrangement (11) and a temperature sensitive channel (45) is connected to the free ends of the other diagonal of the second Wheatstone arrangement (41).

21. A process for calibration of the sensitive element (E) according to any one of claims 5 to 20, **characterised in that** it comprises the following operations:

   - applying a calibration force to said measurement instrument;
   - observing the electrical signal generated;
   - causing, in one or more of said strain gauge strips (10a, 10b, 10c, 10d), a change in phase from a substantially crystalline phase to a phase with a metal-like behaviour, by exerting a pre-determined pressure (T) on a localised section (F) of said one or more strain gauge strips (10a, 10b, 10c, 10d), said localised section (F) having a size and position determined by the difference between said electrical signal generated and a reference signal.

22. A calibration process according to claim 21, wherein said pre-determined pressure has a value not exceeding 30 kbar.

23. A calibration process according to claim 22, wherein said pre-determined pressure is exerted by rubbing.

24. A calibration process according to any one of claims 21 to 23, wherein, when said pre-determined pressure is exerted, the thickness of the strain gauge strip (10a, 10b, 10c, 10d) is reduced in said localised section (F) until it is 10% of the original thickness.

25. A calibration process according to any one of claims 21 to 23, wherein, when said pre-determined pressure is exerted, the colour of the strain gauge strip (10a, 10b, 10c, 10d) is changed from golden to dark brown in said localised section (F).

26. A calibration process according to any one of claims 21 to 25, wherein said operations are performed in controlled temperature conditions.

27. Scale (20) of the type comprising a load cell (23), capable of receiving material and/or objects to be weighed, mechanically connected to one or more sensitive elements (E) according to any one of claims 5 to 16.

28. A pressure transducer (30) of the type comprising one or more sensitive elements (E) according to any one of claims 17 to 20.

**Patentansprüche**

1. Dehnungsmessstreifen (10a), hergestellt unter Verwendung eines Halbleitermaterials des Typs, der mechanisch an einem Träger (1) angebracht werden kann, der Verformung ausgesetzt ist, **dadurch gekennzeichnet, dass** das Halbleitermaterial Samarium-Monosulfid ist.

2. Dehnungsmessstreifen (10a) nach Anspruch 1, der eine Dicke zwischen 0,5 um und 1 μm hat.

3. Dehnungsmessstreifen (10a) nach Anspruch 2, wobei die Dicke ungefähr 0,7 μm beträgt.

4. Dehnungsmessstreifen (10a) nach einem der vorangehenden Ansprüche, wobei das Samarium-Monosulfid monokristallin ist.

5. Empfindliches elektrisches Dehnungsmesselement (E) insbesondere für Messinstrumente (20, 30), des Typs, der einen oder mehrere Dehnungsmessstreifen (10a, 10b, 10c, 10d) umfasst, die aus Halbleitermaterial bestehen, das mit einem elastisch verformbaren Träger (1) verbunden ist, der einer zu messenden Kraft (P, P') ausgesetzt werden kann, und die elektrisch miteinander verbunden sind, um ein elektrisches Signal zu erzeugen, das der Kraft entspricht, **dadurch gekennzeichnet, dass** das Halbleitermaterial Samarium-Monosulfid ist.

6. Empfindliches Element (E) nach Anspruch 5, wobei der eine oder die mehreren Dehnungsmessstreifen (10a, 10b, 10c, 10d) eine Dicke zwischen 0,5 μm und 1 μm haben.

7. Empfindliches Element (E) nach Anspruch 6, wobei die Dicke ungefähr 0,7 μm beträgt.

**8.** Empfindliches Element (E) nach einem der Ansprüche 5 bis 7, wobei das Samarium-Monosulfid monokristallin ist.

**9.** Empfindliches Element (E) nach einem der Ansprüche 5 bis 8, das eine isolierende Schicht (9) zwischen dem Träger (1) und den Dehnungsmessstreifen (10a, 10b, 10c, 10d) aufweist.

**10.** Empfindliches Element (E) nach einem der Ansprüche 5 bis 8, das vier Dehnungsmessstreifen (10a, 10b, 10c, 10d) aufweist, die elektrisch zusammengesetzt sind, so dass eine Wheatstonebrücken-Anordnung (11) entsteht.

**11.** Empfindliches Element (E) nach einem der Ansprüche 5 bis 8, wobei der eine oder die mehreren Dehnungsmessstreifen (10a, 10b, 10c, 10d) an den Punkten maximaler Verformung und/oder Krümmung (6, 7, 32, A) des Trägers (1) angeordnet sind.

**12.** Empfindliches Element (E) nach Anspruch 9, wobei die isolierende Schicht aus SiO besteht.

**13.** Empfindliches Element (E) nach Anspruch 12, wobei das SiO mit einem CVD-Verfahren abgeschieden wird.

**14.** Empfindliches Element (E) nach Anspruch 10, wobei die Dehnungsmessstreifen (10a, 10b, 10c, 10d) elektrisch mittels Leiterstreifen (12) zusammengesetzt werden, die mittels Nickel- und/oder Kobaltabscheidung ausgebildet werden.

**15.** Empfindliches Element (E) nach Anspruch 11, wobei die Dehnungsmessstreifen (10a, 10b, 10c, 10d) so angeordnet sind, dass ihre elektrische Achse mit der mechanischen Achse der Verformung des Trägers (1) zusammenfällt.

**16.** Empfindliches Element (E) nach Anspruch 15, wobei der Träger (1) die Form einer länglichen Leiste mit einem rechteckigen Querschnitt hat, die ein Paar Durchgangslöcher (4, 5) mit kreisförmigem Querschnitt, dem gleichen Durchmesser und zueinander parallel liegenden Achsen aufweist, die so angeordnet sind, dass sie obere (6) und untere (7) dünne Abschnitte der gleichen Dicke bilden, wobei der Träger (1) des Weiteren einen Durchgangsschlitz (8) umfasst, der parallel zu dem Träger (1) entlang seiner Längsachse verläuft, wodurch die zwei Durchgangslöcher (4, 5) in Verbindung miteinander gebracht werden, wobei die dünnen Abschnitte (6, 7) die mechanischen Achsen der Verformung bestimmen.

**17.** Empfindliches Element (E) nach einem der Ansprüche 5 bis 8, wobei der elastisch verformbare Träger eine Membran (1) ist, die den Verschluss eines Zylinders (31) bildet.

**18.** Empfindliches Element (E) nach Anspruch 17, wobei die Membran (1) mit einer isolierenden Schicht überzogen ist, die aus Glas oder Glimmer besteht.

**19.** Empfindliches Element (E) nach Anspruch 18, wobei die isolierende Schicht eine Dicke zwischen 10 µm und 30 µm hat.

**20.** Empfindliches Element (E) nach Anspruch 10, wobei die erste Wheatstonebrücken-Anordnung (11) eine der Seiten einer zweiten Wheatstonebrücken-Anordnung (41) ist, wobei die anderen Seiten Widerstände (44) mit dem gleichen Widerstandswert wie dem der ersten Wheatstonebrücken-Anordnung (11) sind, vorausgesetzt, dass eine Erregereinheit (55) mit den freien Enden einer Diagonale der zweiten Wheatstonebrücken-Anordnung (41) verbunden ist, ein last- oder druckempfindlicher Kanal (42) mit der freien Diagonale der ersten Wheatstonebrücken-Anordnung (11) verbunden ist und ein temperaturempfindlicher Kanal (45) mit den freien Enden der anderen Diagonale der zweiten Wheatstone-Anordnung (41) verbunden ist.

**21.** Verfahren zum Kalibrieren des empfindlichen Elementes (E) nach einem der Ansprüche 5 bis 20, **dadurch gekennzeichnet, dass** es die folgenden Vorgänge umfasst:

- Ausüben einer Kalibrierkraft auf das Messinstrument;

- Beobachten des erzeugten elektrischen Signals;

- Bewirken einer Phasenänderung von einer im Wesentlichen kristallinen Phase zu einer Phase mit einem metallartigen Verhalten in einem oder mehreren der Dehnungsmessstreifen (10a, 10b, 10c, 10d) durch Ausüben eines vorgegebenen Drucks (T) auf einen örtlich begrenzten Abschnitt (F) des einen oder der mehreren Dehnungsmessstreifen (10a, 10b, 10c, 10d), wobei der örtlich begrenzte Abschnitt (F) eine Größe und eine Position hat, die durch die Differenz zwischen dem erzeugten elektrischen Signal und einem Bezugssignal bestimmt wird.

**22.** Kalibrierverfahren nach Anspruch 21, wobei der bestimmte Druck einen Wert hat, der 30 kbar nicht übersteigt.

**23.** Kalibrierverfahren nach Anspruch 22, wobei der vorgegebene Druck durch Reiben ausgeübt wird.

**24.** Kalibrierverfahren nach einem der Ansprüche 21 bis 23, wobei, wenn der vorgegebene Druck ausgeübt wird, die Dicke des Dehnungsmessstreifens (10a, 10b, 10c, 10d) in dem örtlich begrenzten Abschnitt (F) verringert wird, bis sie 10 % der ursprünglichen Dicke beträgt.

**25.** Kalibrierverfahren nach einem der Ansprüche 21 bis 23, wobei, wenn der vorgegebene Druck ausgeübt wird, die Farbe des Dehnungsmessstreifens (10a, 10b, 10c, 10d) in dem örtlich begrenzten Abschnitt (F) von Golden zu Dunkelbraun verändert wird.

**26.** Kalibrierverfahren nach einem der Ansprüche 21 bis 25, wobei die Vorgänge bei gesteuerten Temperaturbedingungen ausgeführt werden.

**27.** Skala (20) des Typs, der eine Messdose (23) umfasst, die in der Lage ist, zu wägendes Material und/oder Objekte aufzunehmen und mechanisch mit einem oder mehreren empfindlichen Elementen (E) nach einem der Ansprüche 5 bis 16 verbunden ist.

**28.** Druckwandler (30) des Typs, der ein oder mehrere empfindliche Elemente (E) nach einem der Ansprüche 17 bis 20 umfasst.

**Revendications**

**1.** Bande de jauge de contrainte (10a), réalisée en utilisant un matériau semi-conducteur, du type qui peut être mécaniquement appliqué à un support (1) soumis à une déformation, **caractérisée en ce que** ledit matériau semi-conducteur est du monosulfure de Samarium.

**2.** Bande de jauge de contrainte (10a) selon la revendication 1, ayant une épaisseur comprise entre 0,5 µm et 1,0 µm.

**3.** Bande de jauge de contrainte (10a) selon la revendication 2, dans laquelle ladite épaisseur est d'approximativement 0,7 µm.

**4.** Bande de jauge de contrainte (10a) selon l'une quelconque des revendications précédentes, dans laquelle le monosulfure de Samarium est monocristallin.

**5.** Elément de jauge de contrainte électrique sensible (E), en particulier pour des instruments de mesure (20, 30), du type comportant une ou plusieurs bandes de jauge de contrainte (10a, 10b, 10c, 10d), constitués d'un matériau semi-conducteur connectés à un support élastiquement déformable (1) capable d'être soumis à une force (P, P') à mesurer, et connectées électriquement les unes aux autres pour générer un signal électrique correspondant à ladite force, **caractérisé en ce que** ledit matériau semi-conducteur est du monosulfure de Samarium.

**6.** Elément sensible (E) selon la revendication 5, dans lequel lesdites une ou plusieurs bandes de jauge de contrainte (10a, 10b, 10c, 10d) ont une épaisseur comprise entre 0,5 µm et 1,0 µm.

**7.** Elément sensible (E) selon la revendication 6, dans lequel ladite épaisseur est d'approximativement 0,7 µm.

**8.** Elément sensible (E) selon l'une quelconque des revendications 5 à 7, dans lequel le monosulfure de Samarium est monocristallin.

**9.** Elément sensible (E) selon l'une quelconque des revendications 5 à 8, qui a une couche isolante (9) entre le support (1) et lesdites bandes de jauge de contrainte (10a, 10b, 10c, 10d).

**10.** Elément sensible (E) selon l'une quelconque des revendications 5 à 8, qui a quatre bandes de jauge de contrainte (10a, 10b, 10c, 10d) assemblées électriquement pour former un agencement de type pont de Wheatstone (11).

**11.** Elément sensible (E) selon l'une quelconque des revendications 5 à 8, dans lequel lesdites une ou plusieurs bandes de jauge de contrainte (10a, 10b, 10c, 10d) sont agencées en correspondance avec les points de déformation et/ou courbe maximum (6, 7, 32, A) du support (1).

**12.** Elément sensible (E) selon la revendication 9, dans lequel ladite couche isolante est constituée de SiO.

**13.** Elément sensible (E) selon la revendication 12, dans lequel le composé SiO est déposé par l'intermédiaire d'un procédé de dépôt chimique en phase vapeur.

**14.** Elément sensible (E) selon la revendication 10, dans lequel les bandes de jauge de contrainte (10a, 10b, 10c, 10d) sont électriquement assemblées par l'intermédiaire de bandes conductrices (12) formées par l'intermédiaire d'un dépôt de Nickel et/ou Cobalt.

**15.** Elément sensible (E) selon la revendication 11, dans lequel lesdites bandes de jauge de contrainte (10a, 10b, 10c, 10d) sont agencées de telle sorte que leur axe électrique coïncide avec l'axe mécanique de déformation du support (1).

**16.** Elément sensible (E) selon la revendication 15, dans lequel ledit support (1) a la forme d'une barre allongée ayant une coupe transversale rectangulaire, ayant une paire de trous traversants (4, 5), ayant une coupe circulaire, de même diamètre et des axes parallèles l'un à l'autre, positionnés de manière à définir des sections minces supérieure (6) et inférieure (7) ayant la même épaisseur, ledit support (1) comportant de plus une fente traversante (8), s'étendant parallèlement au support (1) le long de son axe longitudinal, qui place les deux trous traversants (4, 5) en communication l'un avec l'autre, lesdites parties minces (6, 7) déterminant lesdits axes mécaniques de déformation.

17. Elément sensible (E) selon l'une quelconque des revendications 5 à 8, dans lequel le support élastiquement déformable est une membrane (1) formant la fermeture d'un cylindre (31).

18. Elément sensible (E) selon la revendication 17, dans lequel la membrane (1) est revêtue d'une couche isolante constituée de verre ou de mica.

19. Elément sensible (E) selon la revendication 18, dans lequel la couche isolante a une épaisseur comprise entre 10 μm et 30 μm.

20. Elément sensible (E) selon la revendication 10, dans lequel ledit premier agencement de type pont de Wheatstone (11) est un des épaulements d'un second agencement de type pont de Wheatstone (41) où les autres épaulements sont des résistances (44) ayant la même valeur de résistance que le premier agencement de type pont de Wheatstone (11), pourvu qu'une unité d'excitation (55) soit connectée aux extrémités libres d'une diagonale du second agencement de type pont de Wheatstone (41), un canal sensible à une charge ou une pression (41) est connecté à la diagonale libre du premier agencement de type pont de Wheatstone (11) et un canal sensible à la température (45) est connecté aux extrémités libres de l'autre diagonale du second agencement de type pont de Wheatstone (41).

21. Procédé pour étalonner l'élément sensible (E) selon l'une quelconque des revendications 5 à 20, **caractérisé en ce qu'**il comporte les opérations suivantes consistant à :

   - appliquer une force d'étalonnage dudit instrument de mesure,
   - observer le signal électrique généré,
   - amener, dans une ou plusieurs desdites bandes de jauge de contrainte (10a, 10b, 10c, 10d), un changement de phase par rapport à une phase essentiellement cristalline en une phase ayant un comportement de type métal, en exerçant une pression prédéterminée (T) sur une section localisée (F) desdites une ou plusieurs bandes de jauge de contrainte (10a, 10b, 10c, 10d), ladite section localisée (F) ayant une taille et une position déterminées par la différence entre ledit signal électrique généré et un signal de référence.

22. Procédé d'étalonnage selon la revendication 21, dans lequel ladite pression prédéterminée a une valeur ne dépassant pas 30 kbar.

23. Procédé d'étalonnage selon la revendication 22, dans lequel ladite pression prédéterminée est exercée par frottement.

24. Procédé d'étalonnage selon l'une quelconque des revendications 21 à 23, dans lequel, lorsque ladite pression prédéterminée est exercée, l'épaisseur de la bande de jauge de contrainte (10a, 10b, 10c, 10d) est réduite dans ladite section localisée (F) jusqu'à 10 % de son épaisseur d'origine.

25. Procédé d'étalonnage selon l'une quelconque des revendications 21 à 23, dans lequel, lorsque ladite pression prédéterminée est exercée, la couleur de la bande de jauge de contrainte (10a, 10b, 10c, 10d) change d'une couleur dorée en une couleur brun sombre dans ladite section localisée (F).

26. Procédé d'étalonnage selon l'une quelconque des revendications 21 à 25, dans lequel lesdites opérations sont effectuées dans des conditions à température commandée.

27. Echelle (20) du type comportant une cellule de charge (23), capable de recevoir un matériau et/ou des objets à peser, connectée mécaniquement à un ou plusieurs éléments sensibles (E) selon l'une quelconque des revendications 5 à 16.

28. Transducteur de pression (30) du type comportant un ou plusieurs éléments sensibles (E) selon l'une quelconque des revendications 17 à 20.

FIG 1

FIG 2

FIG 3

EP 1 029 225 B1

FIG 4

FIG 5

P'

31

32          10a                    10b                    32

10d          10c          1

E                                                    31

FIG 6

FIG.7